# EUROPÄISCHE PATENTSCHRIFT

(11) **EP 1 332 183 B1**
(45) Veröffentlichungstag und Bekanntmachung des Hinweises auf die Patenterteilung: **16.06.2004**
(21) Anmeldenummer: 01988749.6
(22) Anmeldetag: 23.10.2001
(51) Int. Cl.: C09B 67/00

(54) **PHTHALSÄUREIMIDE ALS SYNERGISTEN ZUR VERBESSERUNG DER EIGENSCHAFTEN WÄSSRIGER PIGMENTPRÄPARATIONEN**
PHTHALIC ACID IMIDES AS SYNERGISTS FOR IMPROVING THE PROPERTIES OF AQUEOUS PIGMENT PREPARATIONS
IMIDES DE L'ACIDE PHTALIQUE EN TANT QUE SYNERGISTES DESTINES A AMELIORER LES PROPRIETES DE PREPARATIONS PIGMENTAIRES AQUEUSES

(30) Priorität: 26.10.2000 DE 10053119
(43) Veröffentlichungstag der Anmeldung: 06.08.2003
(73) Patentinhaber: Clariant GmbH, 65929 Frankfurt am Main (DE)
(72) Erfinder: WINTER, Martin, Alexander, 65779 Kelkheim (DE); HARZ, Andreas, 65824 Schwalbach (DE); METZ, Hans-Joachim, 64285 Darmstadt (DE)
(74) Vertreter: Hütter, Klaus, Dr.
(86) Internationale Anmeldenummer: PCT/EP2001/012228
(87) Internationale Veröffentlichungsnummer: WO 2002/034840

(56) Entgegenhaltungen:
- EP-A- 1 020 496
- GB-A- 1 435 247
- US-A- 3 453 130

## Beschreibung

Die vorliegende Erfindung liegt auf dem Gebiet der wässrigen Pigmentpräparationen.
Bei der Herstellung von Präparationen und Dispersionen von Farbmitteln, beispielsweise Dispersionsfarbstoffen, oder anorganischen und organischen Pigmenten, für Anwendungen in wässrigen oder organischen Medien wird gegenwärtig eine Vielzahl nichtionischer, anionischer sowie kationischer Tenside eingesetzt. Bei der Einarbeitung von Pigmenten bzw. deren Zubereitungen in Anstrichsysteme, Druckfarben, Kunststoffe und anderen Anwendungen treten zuweilen Schwierigkeiten auf, da sich zahlreiche Pigmente im jeweiligen Anwendungsmedium nur sehr unbefriedigend und unter hohem Dispergieraufwand flockungsstabil feinverteilen lassen. Die anwendungstechnischen Eigenschaften sind deshalb sehr oft unzureichend. So können während des Dispergiervorgangs und auch danach Flockungserscheinungen und Sedimentbildung auftreten, die zu Viskositätsänderungen des Anwendungsmediums, zu Farbtonänderungen und Verlusten an Farbstärke, Deckvermögen, Glanz, Homogenität, Brillanz sowie schlecht reproduzierbaren Farbtönen und zu hoher Ablaufneigung im Falle von Lacken bei den gefärbten Materialien führen.

Zur Verbesserung der Pigmenteigenschaften sind verschiedene Derivate von Pigmentmolekülen bekannt, welche die Dispergierbarkeit verbessern sollen. So werden z.B. Additive für Chinacridonpigmente beschrieben, die auf der chemischen Bindung von Isoindol-1,3-dionen an diese Pigmentklasse beruhen. Ein Beispiel dieser Verbindungsklasse ist das in der US-A-4 478 968 beschriebene 2-(Phthalimidomethyl)-Chinacridon zur Verbesserung der Dispergiereigenschaften des Chinacridon-Pigments.
In der EP-A-0 636 666 werden Imid- sowie Bisimidderivate beschrieben, die sich von Perylen-3,4,9,10-tetracarbonsäureanhydrid ableiten und durch Reaktion mit Aminen zugänglich gemacht werden. Diese Imide eignen sich zur Herstellung von Pigmentzubereitungen. Zudem beschreibt EP-A-1 020 496 Pigmentzubereitungen, die bestimmte Alkylphtalimide enthalten.

Keines der in den vorstehenden genannten Druckschriften beschriebenen Produkte ist jedoch geeignet, die Fließfähigkeit sowie die Flockungsstabilität von Pigmentdispersionen entscheidend zu verbessern, ohne andere Parameter, wie Farbstärke, Glanz, Farbton und Dispergierbarkeit, nachteilig zu beeinflussen. Ein Nachteil der in den vorstehend genannten Druckschriften beschriebenen Produkte ist unter anderem, dass die selbst intensiv gefärbten und löslichen Pigmentderivate unerwünschterweise zum Ausbluten in Bindemittelsystemen oder in Kunststoffen und so zum Einfärben benachbarter Stoffe führen können. Außerdem lassen sich solche von Pigmenten abgeleiteten Verbindungen aufgrund der Schwerlöslichkeit der zugrundeliegenden Pigmente nur unter präparativ schwierigen Bedingungen und unter hohem Kostenaufwand herstellen. Als weiterer Nachteil ist die begrenzte Anwendungsbreite, die aufgrund ihrer Eigenfarbe auf Pigmente gleicher oder ähnlicher Farbe beschränkt bleibt.

Der vorliegenden Erfindung lag die Aufgabe zugrunde, Pigmentpräparationen zur Verfügung zu stellen, die zur Herstellung gut fließfähiger, flockungsbeständiger sowie lagerstabiler Farbmitteldispersionen für den Außen- und Innenanstrich geeignet und weitgehend frei von den vorstehend genannten Nachteilen sind.

Die genannte Aufgabe wird überraschenderweise gelöst, indem organischen oder anorganischen Pigmenten nachstehend genannte nichtpigmentäre cyclische Imide mit aliphatischen oder olefinischen Kohlenstoffketten zugesetzt werden, die nahezu farblos oder nur sehr schwach gefärbt sind.

Gegenstand der vorliegenden Erfindung sind Pigmentpräparationen, enthaltend
a) mindestens ein organisches oder anorganisches Pigment;
b) mindestens ein cyclisches Imid der allgemeinen Formel (1) 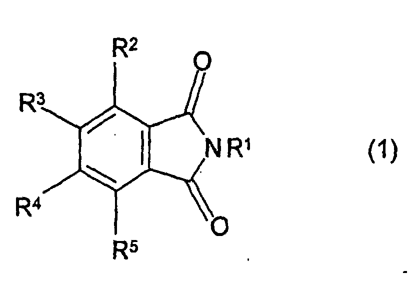 wobei
   R¹ für einen geradkettigen, verzweigten oder cyclischen aliphatischen Rest mit 10 bis 30, vorzugsweise 12 bis 25, Kohlenstoffatomen; für einen Alkenylrest mit 10 bis 30, vorzugsweise 12 bis 25, Kohlenstoffatomen, wobei die genanten Reste durch ein oder mehrere, z.B. 2, 3, 4 oder 5, Substituenten aus der Gruppe C₁-C₆-Alkyl, C₁-C₆-Alkoxy, C₆-C₁₀-Aryl, Hydroxy, Carboxy und Sulfo substituiert sein können;
   R², R³, R⁴ und R⁵ gleich oder verschieden sind und Wasserstoff, C₁-C₁₀-Alkyl, C₁-C₁₀-Alkoxy, Halogen, -OR⁶, -NR⁶R⁷, -COOR⁶, -CONR⁶R⁷, -NR⁶-COR⁷, SO₂NR⁶R⁷, -SO₃M, -NO₂, -CN oder CF₃ bedeuten, wobei R⁶ und R⁷ für H oder einen Alkylrest mit 1 bis 10 C-Atomen und M für ein Äquivalent eines 1 bis 3 wertigen Kations, z.B. Wasserstoff oder Alkalimetall, steht; und
c) gegebenenfalls weitere übliche Zusatzstoffe.

Verbindungen der Formel (1) als solche sind bekannt. So werden diese Verbindungen z.B. in der US-A-4 992 204 beschrieben, jedoch nicht zusammen mit organischen Pigmenten verwendet.
In der US-A-6 039 769 wird die Verwendung von nicht pigmentären, cyclischen Imiden mit kurzen Alkylresten für Perylenpigment-Zubereitungen beschrieben.

Bevorzugte Imide der Formel (1) sind solche, in denen
R¹ Decyl, Dodecyl, Tetradecyl, Octadecyl, Isotridecyl, Lauryl, Oleyl oder Stearyl bedeutet.

Bevorzugte Imide der Formel (1) sind weiterhin solche, in denen R², R³, R⁴ und R⁵ gleich oder verschieden sind und Wasserstoff, Methyl, Ethyl, Propyl, Butyl, Methoxy, Ethoxy, Amino, Methylamino, Dimethylamino, Ethylamino, Diethylamino, Carboxy, COOCH₃, Carbonamid, CON(CH₃)₂, Sulfonamid, SO₂N(CH₃)₂, Sulfo, Nitro, Cyano oder CF₃ bedeuten.

Die in den erfindungsgemäßen Pigmentzubereitungen verwendeten Verbindungen der Formel (1) lassen sich nach bekannten Verfahren aus den aromatischen Grundkörpern, vorzugsweise den cyclischen Anhydriden, durch Reaktion mit den entsprechenden Fettaminen herstellen. Dabei sind die cyclischen Anhydride entweder kommerziell erhältlich, oder können durch bekannte Methoden leicht aus den entsprechenden Dicarbonsäuren, z.B. durch Erhitzen sowie durch Behandlung mit starken Säuren oder dehydrierenden Reagenzien hergestellt werden. Von den zahlreichen Fettaminen und den natürlichen Fettaminmischungen sollen hier nur die wichtigsten genannt werden, wie beispielsweise Dodecylamin, Tetradecylamin, Octadecylamin, Isotridecylamin, Cocosfettamin, Laurylamin, Oleylamin, Rapsölfettamin, Stearylamin oder Talgfettamin. Außer den Fettaminen sind noch Harzamine und die daraus herstellbaren Derivate zu erwähnen. Das bei der Reaktion entstehende Wasser kann gegebenenfalls unter Zusatz eines Schleppmittels, beispielsweise eines Kohlenwasserstoffs oder Chlorkohlenwasserstoffs, durch Abdestillieren entfernt werden.
Bevorzugt wird die Amidbildung jedoch ohne Lösungsmittel einfach durch Abdestillieren des entstehenden Reaktionswasser durchgeführt. Aufgrund der quantitativen Ausbeuten an Amid ist keine weitere Reinigung oder Behandlung des Produktes notwendig.

Beispiele für organische Pigmente im Sinne der Erfindung sind Monoazopigmente, Disazopigmente, Disazokondensationspigmente, verlackte Azopigmente, Triphenylmethanpigmente, Thioindigopigmente, Thiazinindigopigmente, Perylenpigmente, Perinonpigmente, Anthanthronpigmente, Diketopyrrolopyrrolpigmente, Dioxazinpigmente, Chinacridonpigmente, Phthalocyaninpigmente, Isoindolinonpigmente, Isoindolinpigmente, Benzimidazolonpigmente, Naphtholpigmente und Chinophthalonpigmente, bevorzugt sind Anthanthronpigmente, Dioxazinpigmente und Phthalocyaninpigmente, sowie saure bis alkalische Ruße aus der Gruppe der Furnaceruße oder Gasruße.
Geeignete anorganische Pigmente sind beispielsweise Titandioxide, Zinksulfide, Eisenoxide, Chromoxide, Ultramarin, Nickel- und Chromantimontitanoxide, Cobaltoxide und Bismutvanadate.

Bevorzugte Pigmentpräparationen enthalten
a) 5 bis 60 Gew.-%, insbesondere 10 bis 50 Gew.-%, Pigment;
b) 0,1 bis 15 Gew.-%, insbesondere 0,5 bis 10 Gew.-%, des Imids der Formel (1);
c) 0 bis 50 Gew.-%, insbesondere 1 bis 30 Gew.-% an weiteren Zusatzstoffen; und
d) 10 bis 80 Gew.-% Wasser, bezogen auf das Gesamtgewicht der Pigmentpräparation.

Weitere Zusatzstoffe sind beispielsweise anionische, kationische oder nichtionische Tenside, schaumreduzierende Mittel, das Eintrocknen verhindernde Mittel und Konservierungsmittel.

Als Tenside eignen sich alle bekannten anionischen, kationischen und nichtionischen grenzflächenaktiven Verbindungen. Besonders bewährt haben sich Tenside, die eine oder mehrere mittel- oder langkettige Kohlenwasserstoffketten besitzen. Von der Vielzahl der Verbindungen soll an dieser Stelle nur eine Auswahl aufgeführt werden, ohne jedoch die Anwendbarkeit der erfindungsgemäßen Verbindungen auf diese Beispiele einzuschränken. Beispiele sind Alkylsulfate, Alkenylsulfate, Alkylsulfonate, Alkenylsulfonate, Alkylphosphate, Alkylbenzolsulfonate, wie Laurylsulfat, Stearylsulfat, Dodecylsulfonate, Octadecylsulfate, Dodecylsulfonate; Kondensationsprodukte aus Fettsäure und Taurin oder Hydroxyethansulfonsäure, Alkoxylierungsprodukte von Alkylphenolen, Ricinusölkolophoniumestern, Fettalkoholen, Fettaminen, Fettsäuren, und Fettsäureamiden, insbesondere Umsetzungsprodukte aus Nonylphenol und kürzerkettigen, substituierten Alkylphenolen sowie deren polymeren Derivaten z.B. Formaldehyd-Kondensationsprodukten.

Werden zur Herstellung der erfindungsgemäßen Pigmentdispersionen Tenside mit gleichen oder möglichst ähnlichen aliphatischen Resten verwendet, so werden Dispersionen mit besonders guten und anwendungsfreundlichen Eigenschaften erhalten.
Gegenstand der vorliegenden Erfindung ist auch ein Verfahren zur Herstellung der erfindungsgemäßen Pigmentpräparationen, indem die Verbindung(en) der Formel (1) und gegebenenfalls die weiteren Zusatzstoffe bei der Pigmentsynthese, oder während eines der üblichen Formierungsschritte wie Mahlung, Dispergierung oder Finish oder auch erst bei der Einarbeitung des Pigments in das Anwendungsmedium zugegeben werden. Die Verbindung der Formel (1) kann dabei in fester oder gelöster Form dem als Feststoff oder als Dispersion in Wasser oder einem organischen Lösemittel vorliegenden Pigment zugegeben werden.

Dispergier- und Mahlprozesse erfolgen je nach Komhärte des verwendeten Pigments in bekannter Weise, beispielsweise in Sägezahnrührern (Dissolvern), Rotor-Stator-Mühlen, Turbulent-Schnellmischern, Kugel-, Sand- oder Perlmühlen, in Knetaggregaten oder auf Walzenstühlen.

Die auf diese Weise hergestellten flüssig bis pastösen Pigmentpräparationen sind für jeden Zweck verfügbar, für den Farbmitteldispersionen üblicherweise anwendbar sind und hohe Anforderungen an Flockungs- und/oder Lagerstabilität, Viskositätsänderungen des Anwendungsmediums, Farbtonänderungen, Farbstärke, Deckvermögen, Glanz, Homogenität und Brillanz gestellt werden.
So eignen sie sich beispielsweise zum Färben natürlicher sowie synthetischer Materialien. Besonders wertvoll sind sie erfindungsgemäß für die Herstellung von Anstrich- und/oder Druckfarben, sowie zum Einfärben von Kunststoffen und hochmolekularen Materialien, bevorzugt jedoch zur Herstellung von Pigment-Dispersionen, die zusätzlich eines oder mehrere Tenside, Wasser, übliche Mengen an Gerüstsubstanzen oder anderen übliche Zusätzen oder Hilfsstoffen, die in Emulgier- und Dispergierformulierungen verwendet werden, wie z.B. das Eintrocknen verzögernde Zusätze, enthalten. Auf dieser Basis hergestellte, wässrige Dispersionen eignen sich in hervorragender Weise zur Pigmentierung hydrophiler als auch hydrophober Systeme.

Neben der Herstellung von Pigmentdispersionen können die erfindungsgemäßen Verbindungen, vorzugsweise in Kombination mit Tensiden, auch zur Herstellung von Dispersionen von Farbstoffen, optischen Aufhellern, sowie für die Formulierung von Pflanzenschutz- und Schädlingsbekämpfungsmitteln, ferner als Emulgier-, Egalisier- und Färbereihilfsmittel zum Färben von natürlichen und synthetischen Fasermaterialien verwendet werden.

Die erfindungsgemäßen Pigmentdispersionen sind geeignet als Farbmittel in elektrophotographischen Tonern und Entwicklern, wie z.B. Ein- oder Zweikomponentenpulvertonern (auch Ein- oder Zweikomponenten-Entwickler genannt), Magnettonem, Flüssigtonern, Latextonem, Polymerisationstonern sowie Spezialtonern.

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Des weiteren sind die erfindungsgemäßen Pigmentdispersionen geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäßen Pigmentdispersionen als Farbmittel in Tinten, vorzugsweise Ink-Jet Tinten, wie z.B. auf wässriger oder nichtwässriger Basis, Mikroemulsionstinten sowie in solchen Tinten, die nach dem Hot-melt-Verfahren arbeiten, geeignet.
Ink-Jet-Tinten enthalten im allgemeinen insgesamt 0,5 bis 15 Gew.-%, vorzugsweise 1,5 bis 8 Gew.-%, (trocken gerechnet) der erfindungsgemäßen Pigmentdispersionen. Mikroemulsionstinten basieren auf organischen Lösemitteln, Wasser und ggf. einer zusätzlichen hydrotropen Substanz (Grenzflächenvermittler). Mikroemulsionstinten enthalten 0,5 bis 15 Gew.-%, vorzugsweise 1,5 bis 8 Gew.-%, der erfindungsgemäßen Pigmentdispersionen, 5 bis 99 Gew.-% Wasser und 0,5 bis 94,5 Gew.-% organisches Lösungsmittel und/oder hydrotrope Verbindung.

"Solvent based" Ink-Jet-Tinten enthalten vorzugsweise 0,5 bis 15 Gew.-% der erfindungsgemäßen Pigmentdispersionen, 85 bis 99,5 Gew.-% organisches Lösungsmittel und/oder hydrotrope Verbindungen.

Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60 und ca. 140°C liegt. Hot-Melt Ink-Jet-Tinten bestehen z.B. im wesentlichen aus 20 bis 90 Gew.-% Wachs und 1 bis 10 Gew.-% der erfindungsgemäßen Pigmentdispersionen. Weiterhin können 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis
2 Gew.-% Antioxidans enthalten sein. Typische Zusatzstoffe und Hilfsmittel sind z.B. in US-PS 5,560,760 beschrieben.

Außerdem sind die erfindungsgemäßen Pigmentdispersionen auch geeignet als Farbmittel für Farbfilter, sowohl für die additive wie für die subtraktive Farberzeugung und für "elektronische Tinten".

Die erfindungsgemäß hergestellten Pigmentdispersionen sind in jedem Verhältnis mit Wasser mischbar zeichnen sich gegenüber herkömmlichen Pigmentdispersionen durch eine hervorragende Flockungs- sowie Lagerstabilität in zahlreichen wässrigen Dispersionsfarben aus. Werden zur Herstellung der Pigmentdispersionen Tenside verwendet, die mit hydrophoben Lackbindemittel-Systemen kompatibel sind, so lassen sich auch in hydrophoben Medien flockungsstabile Dispersionen herstellen. Hervorzuheben sind insbesondere die guten rheologischen Eigenschaften sowie die ausgezeichnete Verteilbarkeit in unterschiedlichen Anwendungsmedien.
Die erfindungsgemäßen Verbindungen ermöglichen es also, vorzugsweise in Kombination mit einem geeigneten Tensid, beim Dispergierprozess die volle Farbstärke und Brillanz der Pigmente nahezu zu erreichen und im Anwendungsmedium dauerhaft zu stabilisieren. Helle und brillante Farbtöne werden durch die geringe Eigenfärbung der Verbindungen nicht beeinträchtigt.

In den folgenden Beispielen bedeuten Prozentangaben Gewichtsprozent und TI. Gewichtsteile.

### 1. Wässrige Präparation mit einem Violett-Pigment (C.I. Pigment Violett 23) Präparation A

### 1.1 Vergleichspräparation ohne Synergist

Zur Bewertung der erfindungsgemäßen Verbindungen wird zunächst eine Präparation ohne Synergist hergestellt. Diese Präparation wird dann sowohl in eine Weißdispersion als auch in das Lacksystem eingerührt und ausgefärbt. Diese Ausfärbungen dienen als Standard, mit dem die neuen Präparationen verglichen werden.

### Bestandteile:

| | |
|---|---|
| 20% | C.I. Pigment Violett 23 |
| 21% | Gemisch nichtionischer Dispergatoren (Polyphenol/Fettalkoholethoxylat) |
| 1 % | Gemisch langkettiger Fettsäuren |
| 10 % | Glycerin |
| 10 % | Propylenglykol |
| 0,2 % | Konservierungsmittel |
| 37,8 % | entsalztes Wasser |

Zur Herstellung der Pigmentpräparationen werden zunächst in einer Laborperlmühle analog der in den Beispielen aufgeführten Rezepturen die flüssigen Bestandteile, homogenisiert. Mit einer Sägezahnscheibe wird dann das pulverförmige Pigment eingearbeitet und dabei die Menge Wasser so gewählt, das ein homogener, relativ hochviskoser, gut rührbarer Teig entsteht. Anschließend wird der Mahlkörper (1 mm Siliquarzitperlen) zugegeben und 60 min gemahlen. Nach dem ersten Durchmischen des Mahlmediums zu Beginn der Mahlung wird die optimale Mahlviskosität durch Zugabe von Wasser entsprechend eingestellt. Nach der Mahlung wird der Mahlkörper durch Zentrifugation abgetrennt.
Zur Eignungsprüfung wird diese Pigmentpräparation 1 %ig in eine kommerziell erhältliche Standardweißdispersion eingerührt, in dünnem Film appliziert und danach coloristisch ausgewertet.

Ebenso erfolgt die Einarbeitung in einen Prüflack zur Beurteilung der Lackverträglichkeit der Pigmentpräparation. Neben der Einarbeitung der Pigmentpräparation in den Prüflack durch ca. 10 min Einrühren mit einem Spatel wird eine analoge Probe durch ca. 10 min. Einrühren mir einer Dissolverscheibe hergestellt. Beide Proben werden bezüglich der Farbstärke miteinander verglichen. Dabei deuten Werte nahe bei 100% auf ausgezeichnete Dispergierung und hohe Lackverträglichkeit der Pigmentpräparation hin.

Zur Prüfung der Verteilbarkeit bzw. der Flockungsbeständigkeit im Anwendungsmedium wird ein Teil des Films nach kurzem Antrocknen mit einem Pinsel oder mit einem Finger unter mäßigem Druck wiederholt nachgerieben. Lässt sich die Pigmentpräparation nur unbefriedigend im Prüfmedium verteilen oder fand beim Einbringen der Präparation in das Prüfmedium ein Flockulationsprozeß statt, so werden flockulierte bzw. agglomerierte Pigmentpartikel durch die durch Reibung auf den Film ausgeübte Scherkraft zumindest teilweise entflockuliert bzw. entagglomeriert. Die so behandelte Fläche weist dann entweder eine höhere Farbstärke und/oder einen unregelmäßigeren oder ungleichen Farbton im Vergleich zur ungeriebenen Fläche auf. Der Rub-out Test eignet sich als einfacher, aber meist sehr sensitiver Test, um die Qualität bezüglich der Verteilbarkeit und der Flockungsbeständigkeit einer Pigmentpräparation relativ einfach zu beurteilen. Ein derartiger Test ist in der Literatur vielfach beschrieben, z.B. in FARBE & LACKE 100, Jahrgang 6/2000, 51-61.

Zur Prüfung der Lagerstabilität wird eine Probe der Pigmentpräparation bei 50-60°C in einem verschlossenem Gefäß für 4 bis 5 Wochen warmgelagert. Die Viskosität der Proben wird sowohl vor als auch nach dieser Lagerung gemessen. Bei der Präparationen ohne Synergist zeigten sich starke rub-out Effekte, d.h. die geriebene Fläche der Ausfärbungen weist eine höhere Farbstärke sowie starke Unregelmäßigkeiten im Farbton auf. Außerdem dicken die Präparationen sowohl bei Raumtemperatur als auch bei 50-60°C innerhalb weniger Tage zu einer festen Masse ein, die auch durch Aufrühren oder Aufschütteln nicht mehr zu verflüssigen ist und anwendungstechnisch nicht mehr als Pigmentpräparation zu gebrauchen ist.

### 1.2 Präparation mit Synergist 1

### Herstellung des Synergisten 1:

74,06 Teile Phthalsäureanhydrid und 133,75 Teile Oleylamin werden bei Raumtemperatur gemischt und unter Rühren und Stickstoffatmosphäre 4 Stunden auf 130°C erwärmt. Dabei wird das entstehende Reaktionswasser kontinuierlich abdestilliert.

### Herstellung der Pigmentpräparation:

| | |
|---|---|
| 20 % | C.I. Pigment Violett 23 |
| 21 % | Gemisch nichtionischer Dispergatoren (Polyphenol/Fettalkoholethoxylat) |
| 2 % | Synergist 1 |
| 1 % | Gemisch langkettiger Fettsäuren |
| 10 % | Glycerin |
| 10 % | Propylenglykol |
| 0,2 % | Konservierungsmittel |
| 35,8 % | entsalztes Wasser |

Die Pigmentpräparation wird wie in Beispiel 1.1 beschrieben, aber unter Verwendung obiger Rezeptur sowie des oben beschriebenen Synergisten 1 hergestellt. Zur Eignungsprüfung werden 1 % dieser Pigmentpräparation in kommerziell erhältliche Standardweißdispersion eingerührt, in dünnem Film appliziert und danach coloristisch ausgewertet. Ebenso erfolgte die Einarbeitung in einen Prüflack zur Beurteilung der Lackverträglichkeit der Pigmentpräparation. Neben der Einarbeitung der Pigmentpräparation in den Prüflack durch ca. 10 min Einrühren mit einem Spatel wird eine analoge Probe durch ca. 10 min. Einrühren mit einer Dissolverscheibe hergestellt. Beide Proben werden bezüglich der Farbstärke miteinander verglichen (HR-Verteilung).
Zur Prüfung der Verteilbarkeit bzw. der Flockungsbeständigkeit im Anwendungsmedium wird ein Teil des Films nach kurzem Antrocknen mit einem Pinsel oder mit einem Finger unter mäßigem Druck wiederholt nachgerieben (Rub-out Test).

### Ergebnisse:

| | | |
|---|---|---|
| rel. Farbstärke (matt, 1 %ig) | 107 %, | dC=1.36 (III reiner), |
| | | dH=-0.32 (II blauer, dE=1.4 |
| rel. Farbstärke (lack, 1 %ig) | 103 %, | dC=-0.32 (II trüber), |
| | | dH= -0.49 (II blauer), dE=0.59 |
| HR-Verteilung | 106% | |
| Viskosität (frisch) | 911.9 mPas | |
| Viskosität (4 Wochen/50°C) | 1554.0 mPas | |

Die erfindungsgemäß, hergestellte Pigmentpräparation erweist sich als lagerstabil, d.h. die Probe blieb trotz der Warmlagerung für 4 Wochen bei 50°C sehr gut fließfähig. Die Hand-Rührer (HR) Verteilung von nur 106 % ist ein Beweis für die ausgezeichnete Dispergierung und die hohe Lackverträglichkeit der Pigmentpräparation. Bei der Präparationen zeigten sich keinerlei rub-out Effekte, d.h. die geriebene Fläche der Ausfärbungen weist eine identische Farbstärke sowie keine Unregelmäßigkeiten im Farbton auf. Die Ausprüfung dieser Pigmentpräparation in kommerziell erhältliche Standardweißdispersion ergibt neben dem deutlichen Farbstärkegewinn einen zudem deutlich reineren Farbton im Vergleich zu der Präparation ohne den erfindungsgemäßen Synergisten.

### 1.3 Präparation mit Synergist 2

### Herstellung des Synergisten 2:

Gemäß Beispiel 1.2 aus 74,06 TI. Phthalsäureanhydrid und 131,0 Tl. Talgfettamin.

### Herstellung der Pigmentpräparation:

Die Pigmentpräparation wird wie in Beispiel 1.1 beschrieben, aber unter Verwendung des obigen Synergisten 2 sowie der unter Beispiel 1.2 aufgeführten Rezeptur hergestellt und wie vorstehend beschrieben geprüft.

### Ergebnisse:

| | | |
|---|---|---|
| rel. Farbstärke (matt, 1 %ig) | 105 %, | dC=1.07(III reiner), |
| | | dH=-0.32 (II blauer), dE=1.12 |
| rel. Farbstärke (lack 1 %ig) | 97 %, | dC=-0.46 (II trüber), |
| | | dH= -0.40 (II blauer), dE=0.61 |
| HR-Verteilung | 106 % | |
| Viskosität (frisch) | 839.6 mPas | |
| Viskosität (4 Wochen/50°C) | 1032.0 mPas | |

Die erfindungsgemäß hergestellte Pigmentpräparation erweist sich als ausgezeichnet lagerstabil, d.h. die Probe blieb trotz der Warmlagerung für 4 Wochen bei 50°C sehr gut fließfähig. Bei der Präparationen zeigten sich keinerlei rub-out Effekte, d.h. die geriebene Fläche der Ausfärbungen weist eine identische Farbstärke sowie keine Unregelmäßigkeiten im Farbton auf. Die Ausprüfung dieser Pigmentpräparation in kommerziell erhältliche Standardweißdispersion ergibt neben dem deutlichen Farbstärkegewinn einen zudem deutlich reineren Farbton im Vergleich zu der Präparation ohne den erfindungsgemäßen Synergisten.

### 1.4 Präparation mit Synergist 3

### Herstellung des Synergisten 3:

Gemäß Beispiel 1.2 aus 58,5 TI. Phthalsäureanhydrid und 106,5 TI.
Octadecylamin (95 %ig).

### Herstellung der Pigmentpräparation:

Die Pigmentpräparation wird wie in Beispiel 1.1 beschrieben, aber unter Verwendung des obigen Synergisten 3 sowie der unter Beispiel 1.2 aufgeführten Rezeptur hergestellt und wie vorstehend beschrieben geprüft.

### Ergebnisse:

| | | |
|---|---|---|
| rel. Farbstärke (matt, 1 %ig) | 108 %, | dC=1.35(III reiner), |
| | | dH=-0.30 (II blauer), dE=1.39 |
| rel. Farbstärke (lack, 1 %ig) | 96 %, | dC=-0.69 (III trüber), |
| | | dH= -0.44 (II blauer), dE=0.82 |
| HR-Verteilung | 106 % | |
| Viskosität (frisch) | 683.7 mPas | |
| Viskosität (4 Wochen/50°C) | 1034.0 mPas | |

Die erfindungsgemäß hergestellte Pigmentpräparation erweist sich als ausgezeichnet lagerstabil, d.h. die Probe blieb trotz der Warmlagerung für 4 Wochen bei 50°C sehr gut fließfähig. Bei der Präparationen zeigten sich keinerlei rub-out Effekte, d.h. die geriebene Fläche der Ausfärbungen weist eine identische Farbstärke sowie keine Unregelmäßigkeiten im Farbton auf. Die Ausprüfung dieser Pigmentpräparation in kommerziell erhältliche Standardweißdispersion ergibt neben dem deutlichen Farbstärkegewinn einen zudem deutlich reineren Farbton im Vergleich zu der Präparation ohne den erfindungsgemäßen Synergisten.

### 2. Wässrige Präparation mit C.I. Pigment Violett 23 Präparation B

### 2.1 Vergleichspräparation ohne Synergist

Zur Bewertung der erfindungsgemäßen Verbindungen wird zunächst eine Präparation ohne Synergist hergestellt. Diese Präparation wird dann in eine Weißdispersion eingerührt und ausgefärbt. Diese Ausfärbungen dienen als Standard, mit dem die neuen Präparationen verglichen werden.

### Bestandteile:

| | |
|---|---|
| 30 % | C.I. Pigment Violett 23 |
| 12 % | Gemisch nichtionischer Dispergatoren (Polyphenol/Fettalkoholethoxylat) |
| 20,0 % | Propylenglykol |
| 0,2 % | Konservierungsmittel |
| 37,8 % | entsalztes Wasser |

### Herstellung und Eignungsprüfung der Pigmentpräparation wie unter 1.1 beschrieben.

Bei der Präparationen ohne Synergist zeigten sich starke rub-out Effekte, d.h. die geriebene Fläche der Ausfärbungen weist eine höhere Farbstärke sowie starke Unregelmäßigkeiten im Farbton auf. Außerdem dicken die Präparationen sowohl bei Raumtemperatur als auch bei 50-60°C innerhalb weniger Tage zu einer festen Masse ein, die auch durch Aufrühren oder Aufschütteln nicht mehr zu verflüssigen ist und anwendungstechnisch nicht mehr als Pigmentpräparation zu gebrauchen ist.

### 2.2 Präparation mit Synergist 2

### Herstellung des Synergisten 2:

Gemäß Beispiel 1.2 aus 74,06 TI. Phthalsäureanhydrid und 133,75 TI. Oleylamin.

### Bestandteile der Pigmentpräparation:

| | |
|---|---|
| 30 % | C.I. Pigment Violett 23 |
| 12 % | Gemisch nichtionischer Dispergatoren (Polyphenol/Fettalkoholethoxylat) |
| 4 % | Synergist 2 |
| 20,0 % | Propylenglykol |
| 0,2 % | Konservierungsmittel |
| 33,8 % | entsalztes Wasser |

### Ergebnisse:

| | | |
|---|---|---|
| rel. Farbstärke (matt, 1 %ig) | 101 %, | dC=0.43 (II reiner), |
| | | dH=-0.12 (I blauer), dE=0.45 |
| Viskosität (frisch) | 762.1 mPas | |
| Viskosität (4 Wochen/50°C) | 800.0 mPas | |

Die erfindungsgemäß hergestellte Pigmentpräparation erweist sich als ausgezeichnet lagerstabil, d.h. die Probe blieb trotz der Warmlagerung für 4 Wochen bei 50°C sehr gut fließfähig. Bei der Präparation zeigten sich keinerlei rub-out Effekte, d.h. die geriebene Fläche der Ausfärbungen weist eine identische Farbstärke sowie keine Unregelmäßigkeiten im Farbton auf. Die Ausprüfung dieser Pigmentpräparation in kommerziell erhältliche Standardweißdispersion ergibt zudem einen deutlich reineren Farbton im Vergleich zu der Präparation ohne den erfindungsgemäßen Synergisten.

Ebenso verbessert der erfindungsgemäße Synergist das Mahlverhalten positiv. Während ohne Synergist die Temperatur der Pigmentpräparation während der Mahlung nicht wesentlich über 25°C steigen sollte, um Eindicken zu vermeiden, kann die Präparation mit Synergist noch bei 60°C bis zum Erreichen der Zielfarbstärke gemahlen werden. Es ist dabei keine wesentliche Beeinträchtigung der coloristischen Daten im Vergleich zur Mahlung bei 25°C zu beobachten.

### 3. Wässrige Präparation mit einem Rot-Pigment (C.I. Pigment Red 168)

### 3.1 Vergleichspräparation ohne Synergist

Zur Bewertung der erfindungsgemäßen Verbindungen wird zunächst eine Präparation ohne Synergist hergestellt. Diese Präparation wird dann in eine Weißdispersion eingerührt und ausgefärbt. Diese Ausfärbungen dienen als Standard mit dem die neuen Präparationen verglichen werden.

### Bestandteile:

| | |
|---|---|
| 35 % | C.I. Pigment Red 168 |
| 10 % | Gemisch nichtionischer Dispergatoren (Fettalkoholethoxylate) |
| 10,0 % | Propylenglykol |
| 10,0 % | Diethylenglykol |
| 0,2 % | Konservierungsmittel |
| 34,8 % | entsalztes Wasser |

### Herstellung und Eignungsprüfung der Pigmentpräparation wie unter 1.1 beschrieben.

Bei der Präparationen ohne Synergist zeigten sich starke rub-out Effekte, d.h. die geriebene Fläche der Ausfärbungen weist eine höhere Farbstärke sowie starke Unregelmäßigkeiten im Farbton auf. Außerdem dicken die Präparationen sowohl bei Raumtemperatur als auch bei 50-60°C innerhalb weniger Tage zu einer festen Masse ein, die auch durch Aufrühren oder Aufschütteln nicht mehr zu verflüssigen ist und anwendungstechnisch nicht mehr als Pigmentpräparation zu gebrauchen ist.

### 3.2. Präparation mit Synergist 2

### Herstellung des Synergisten 2:

Gemäß Beispiel 1.2 aus 74.06 TI. Phthalsäureanhydrid und 133.75 Tl. Oleylamin.

### Bestandteile der Pigmentpräparation:

| | |
|---|---|
| 35 % | C.I. Pigment Red 168 |
| 10 % | Gemisch nichtionischer Dispergatoren (Fettalkoholethoxylate) |
| 4 % | Synergist |
| 10,0 % | Propylenglykol |
| 10,0 % | Diethylenglykol |
| 0,2 % | Konservierungsmittel |
| 30,8 % | entsalztes Wasser |

### Ergebnisse:

| | |
|---|---|
| rel. Fst. (matt, 3 %ig) | 105 %, dC=0.58 (II reiner); dH=0.41 (II gelber), dE=0.76 |
| rel. Fst. (lack, 3 %ig) | 100 %, dC=0.15 (I reiner), dH= -0.04 (/=/), dE=0.16 |
| Viskosität (frisch) | 209,0 mPas |
| Viskosität (4 Wochen/50°C) | 316,7 mPas |

Die erfindungsgemäß hergestellte Pigmentpräparation erweist sich als ausgezeichnet lagerstabil, d.h. die Probe blieb trotz der Warmlagerung für 4 Wochen bei 50°C sehr gut fließfähig. Bei der Ausprüfung der Präparationen (3 %ig, Weißdispersion und Lack) zeigten sich keinerlei rub-out Effekte, d.h. die geriebene Fläche der Ausfärbungen weist eine identische Farbstärke sowie keine Unregelmäßigkeiten im Farbton auf. Die Ausprüfung dieser Pigmentpräparation in kommerziell erhältlichen Standardweißdispersion sowie im Lacksystem ergibt zudem einen deutlich reineren Farbton im Vergleich zu der Präparation ohne den erfindungsgemäßen Synergisten. Ebenso verbessert der erfindungsgemäße Synergist das Mahlverhalten positiv. Während ohne Synergist die Temperatur der Pigmentpräparation während der Mahlung nicht wesentlich über 25°C steigen sollte, um Eindicken zu vermeiden, kann die Präparation mit Synergist noch bei 60°C bis zum Erreichen der Zielfarbstärke gemahlen werden. Es ist dabei keine wesentliche Beeinträchtigung der coloristischen Daten im Vergleich zur Mahlung bei 25°C zu beobachten.

### 4. Wässrige Präparation mit einem Grün-Pigment (C.l. Pigment Green 7)

### 4.1 Vergleichspräparation ohne Synergist

Zur Bewertung der erfindungsgemäßen Verbindungen wird zunächst eine Präparation ohne Synergist hergestellt. Diese Präparation wird dann in eine Weißdispersion eingerührt und ausgefärbt. Diese Ausfärbungen dienen als Standard mit dem die neuen Präparationen verglichen werden.

### Bestandteile:

| | |
|---|---|
| 45 % | C.I. Pigment Green 7 |
| 8 % | Gemisch nichtionischer Dispergatoren (Fettalkoholethoxylate) |
| 19,0 % | Diethylenglykol |
| 0,2 % | Konservierungsmittel |
| 27,8 % | entsalztes Wasser |

### Herstellung und Eignungsprüfung der Pigmentpräparation wie unter 1.1 beschrieben.

Bei der Präparationen ohne Synergist zeigten sich starke rub-out Effekte, d.h. die geriebene Fläche der Ausfärbungen weist eine höhere Farbstärke sowie starke Unregelmäßigkeiten im Farbton auf. Außerdem dicken die Präparationen sowohl bei Raumtemperatur als auch bei 50-60°C innerhalb weniger Tage zu einer festen Masse ein, die auch durch Aufrühren oder Aufschütteln nicht mehr zu verflüssigen ist und anwendungstechnisch nicht mehr als Pigmentpräparation zu gebrauchen ist.

### 4.2 Präparation mit Synergist 2

### Herstellung des Synergisten 2:

Gemäß Beispiel 1.2 aus 74,06 TI. Phthalsäureanhydrid und 133,75 TI. Oleylamin.

### Bestandteile:

| | |
|---|---|
| 45 % | C.l. Pigment Green 7 |
| 8 % | Gemisch nichtionischer Dispergatoren (Fettalkoholethoxylate) |
| 3 % | Synergist |
| 19,0 % | Diethylenglykol |
| 0,2 % | Konservierungsmittel |
| 24,8 % | entsalztes Wasser |

### Ergebnisse:

| | | |
|---|---|---|
| rel. Farbstärke (matt, 1 %ig) | 105 %, | dC=-0.33 (II trüber), |
| | | dH=0.41 (II blauer), dE=0.54 |
| rel. Farbstärke (lack, 1 %ig) | 105 %, | dC=0.22 (l reiner), |
| | | dH= -0.07 (/=/), dE=0.24 |
| Viskosität (frisch) | 305,5 mPas | |
| Viskosität (4 Wochen/50°C) | 712,1 mPas | |

Die erfindungsgemäß hergestellte Pigmentpräparation erweist sich als ausgezeichnet lagerstabil, d.h. die Probe blieb trotz der Warmlagerung für 4 Wochen bei 50°C sehr gut fließfähig. Bei der Ausprüfung der Präparationen (1 %ig, Weißdispersion und Lack) zeigten sich keinerlei rub-out Effekte, d.h. die geriebene Fläche der Ausfärbungen weist eine identische Farbstärke sowie keine Unregelmäßigkeiten im Farbton auf. Die Ausprüfung dieser Pigmentpräparation in kommerziell erhältlichen Lacksystem ergibt zudem einen reineren Farbton im Vergleich zu der Präparation ohne den erfindungsgemäßen Synergisten. Ebenso verbessert der erfindungsgemäße Synergist das Mahlverhalten positiv. Während ohne Synergist die Temperatur der Pigmentpräparation während der Mahlung nicht wesentlich über 25°C steigen sollte, um Eindicken zu vermeiden, kann die Präparation mit Synergist noch bei 60°C bis zum Erreichen der Zielfarbstärke gemahlen werden. Es ist dabei keine wesentliche Beeinträchtigung der coloristischen Daten im Vergleich zur Mahlung bei 25°C zu beobachten.

## Patentansprüche

1. Pigmentpräparation, enthaltend
a) mindestens ein organisches oder anorganisches Pigment;
b) mindestens ein cyclisches Imid der allgemeinen Formel (1) 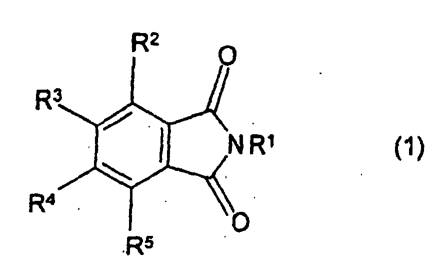 wobei
R¹ für einen geradkettigen, verzweigten oder cyclischen aliphatischen Rest mit 10 bis 30 Kohlenstoffatomen; für einen Alkenylrest mit 10 bis 30 Kohlenstoffatomen, wobei die genanten Reste durch ein oder mehrere Substituenten aus der Gruppe
C₁-C₆-Alkyl, C₁-C₆-Alkoxy, C₆-C₁₀-Aryl, Hydroxy, substituiert sein können, steht;
R², R³, R⁴ und R⁵ gleich oder verschieden sind und Wasserstoff, C₁-C₁₀-Alkyl, C₁-C₁₀-Alkoxy, Halogen, -OR⁶, -NR⁶R⁷, -COOR⁶, -CONR⁶R⁷, -NR⁶-COR⁷, SO₂NR⁶R⁷, -SO₃M, -NO₂, -CN oder CF₃ bedeuten, wobei R⁶ und R⁷ für H oder einen Alkylrest mit 1 bis 10 C-Atomen und M für ein Äquivalent eines 1 bis 3 wertigen Kations, steht; und
c) gegebenenfalls weitere übliche Zusatzstoffe.

2. Pigmentpräparation nach Anspruch 1, **dadurch gekennzeichnet, dass** R¹ Decyl, Dodecyl, Tetradecyl, Octadecyl, Isotridecyl, Lauryl, Oleyl oder Stearyl bedeutet.

3. Pigmentpräparation nach Anspruch 1 oder 2, **dadurch gekennzeichnet, dass** R², R³, R⁴ und R⁵ gleich oder verschieden sind und Wasserstoff, Methyl, Ethyl, Propyl, Butyl, Methoxy, Ethoxy, Amino, Methylamino, Dimethylamino, Ethylamino, Diethylamino, Carboxy, COOCH₃, Carbonamid, CON(CH₃)₂, Sulfonamid, SO₂N(CH₃)₂, Sulfo, Nitro, Cyano oder CF₃ bedeuten.

4. Pigmentpräparation nach mindestens einem der Ansprüche 1 bis 3, **dadurch gekennzeichnet, dass** das organische Pigment a) ein Monoazopigment, Disazopigment, Disazokondensationspigment, verlacktes Azopigment, Triphenylmethanpigment, Thioindigopigment, Thiazinindigopigment, Perylenpigment, Perinonpigment, Anthanthronpigment, Diketopyrrolopyrrolpigment, Dioxazinpigment, Chinacridonpigment, Phthalocyaninpigment, Isoindolinonpigment, Isoindolinpigment, Benzimidazolonpigment, Naphtholpigment oder Chinophthalonpigment, oder Ruß ist.

5. Pigmentpräparation nach mindestens einem der Ansprüche 1 bis 4, enthaltend
a) 5 bis 60 Gew.-%, insbesondere 10 bis 50 Gew.-%, Pigment;
b) 0,1 bis 15 Gew.-%, insbesondere 0,5 bis 10 Gew.-%, des Imids der Formel (1);
c) 0 bis 50 Gew.-%, insbesondere 1 bis 30 Gew.-% an weiteren Zusatzstoffen; und
d) 10 bis 80 Gew.-% Wasser, bezogen auf das Gesamtgewicht der Pigmentpräparation.

6. Pigmentpräparation nach mindestens einem der Ansprüche 1 bis 5, **dadurch gekennzeichnet, dass** der weitere Zustzstoff ein anionisches, kationisches oder nichtionisches Tensid ist.

7. Pigmentpräparation nach Anspruch 6, **dadurch gekennzeichnet, dass** das Tensid eine Verbindung aus der Gruppe der Alkylsulfate, Alkenylsulfate, Alkylsulfonate, Alkenylsulfonate, Alkylphosphate, Alkylbenzolsulfonate; Kondensationsprodukte aus Fettsäure und Taurin oder Hydroxyethansulfonsäure; Alkoxylierungsprodukte von Alkylphenolen, Ricinusölkolophoniumestern, Fettalkoholen, Fettaminen, Fettsäuren und Fettsäureamiden ist.

8. Verfahren zur Herstellung einer Pigmentpräparation nach mindestens einem der Ansprüche 1 bis 7, **dadurch gekennzeichnet, dass** die Verbindung der Formel (1) dem Pigment während seiner Synthese, Mahlung, Dispergierung und/oder Finish zugegeben wird.

9. Verwendung einer Pigmentpräparation nach einem oder mehreren der Ansprüche 1 bis 7 als Farbmittel für die Herstellung von Anstrichfarben, Lacken, Druckfarben, elektrophotographischen Tonern und Entwicklern, Pulverlacken, Tinten, und zum Einfärben von Kunststoffen.

## Claims

1. A pigment preparation comprising
a) at least one organic or inorganic pigment;
b) at least one cyclic imide of the general formula (1) 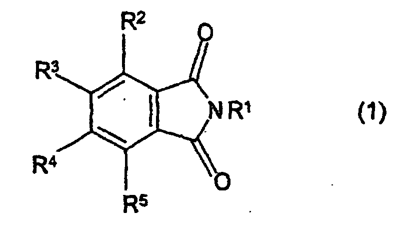 where
R¹ stands for a straight-chain, branched or cyclic aliphatic radical having 10 to 30 carbon atoms; for an alkenyl radical having 10 to 30 carbon atoms, it being possible for the radicals stated to be substituted by one or more substituents from the group consisting of C₁-C₆ alkyl, C₁-C₆ alkoxy, C₆-C₁₀ aryl, hydroxyl;
R², R³, R⁴ and R⁵ are identical or different and denote hydrogen, C₁-C₁₀ alkyl, C₁-C₁₀ alkoxy, halogen, -OR⁶, -NR⁶R⁷, -COOR⁶, -CONR⁶R⁷, -NR⁶-COR⁷, SO₂NR⁶R⁷, -SO₃M, -NO₂, -CN or CF₃, R⁶ and R⁷ standing for H or an alkyl radical having 1 to 10 carbon atoms and M standing for one equivalent of a 1 to 3 valent cation; and
c) if desired, further customary additives.

2. The pigment preparation of claim 1, **characterized in that** R¹ denotes decyl, dodecyl, tetradecyl, octadecyl, isotridecyl, lauryl, oleyl or stearyl.

3. The pigment preparation of claim 1 or 2, **characterized in that** R², R³, R⁴ and R⁵ are identical or different and denote hydrogen, methyl, ethyl, propyl, butyl, methoxy, ethoxy, amino, methylamino, dimethylamino, ethylamino, diethylamino, carboxyl, COOCH₃, carboxamide, CON(CH₃)₂, sulfonamide, SO₂N(CH₃)₂, sulfo, nitro, cyano or CF₃.

4. The pigment preparation of at least one of claims 1 to 3, **characterized in that** the organic pigment a) is a monoazo pigment, disazo pigment, disazo condensation pigment, laked azo pigment, triphenylmethane pigment, thioindigo pigment, thiazine indigo pigment, perylene pigment, perinone pigment, anthanthrone pigment, diketopyrrolopyrrole pigment, dioxazine pigment, quinacridone pigment, phthalocyanine pigment, isoindolinone pigment, isoindoline pigment, benzimidazolone pigment, naphthol pigment or quinophthalone pigment, or carbon black.

5. The pigment preparation of at least one of claims 1 to 4, comprising
a) 5 to 60% by weight, especially 10 to 50% by weight, of pigment;
b) 0.1 to 15% by weight, especially 0.5 to 10% by weight, of the imide of the formula (1);
c) 0 to 50% by weight, especially 1 to 30% by weight, of further additives; and
d) 10 to 80% by weight of water, based on the total weight of the pigment preparation.

6. The pigment preparation of at least one of claims 1 to 5, **characterized in that** the further additive is an anionic, cationic or nonionic surfactant.

7. The pigment preparation of claim 6, **characterized in that** the surfactant is a compound selected from the group consisting of alkyl sulfates, alkenyl sulfates, alkylsulfonates, alkenylsulfonates, alkyl phosphates, alkylbenzenesulfonates; condensation products of fatty acid and taurine or hydroxyethanesulfonic acid; alkoxylation products of alkylphenols, castor oil rosin esters, fatty alcohols, fatty amines, fatty acids, and fatty acid amides.

8. A process for preparing a pigment preparation of at least one of claims 1 to 7, **characterized in that** the compound of the formula (1) is added to the pigment during its synthesis, grinding, dispersing and/or finishing.

9. Use of a pigment preparation of one or more of claims 1 to 7 as a colorant for preparing paints, varnishes, printing inks, electrophotographic toners and developers, powder coating materials, other inks, and for coloring plastics.

## Revendications

1. Préparation pigmentaire, contenant
a) au moins un pigment organique ou inorganique,
b) au moins un imide cyclique de formule générale (1) 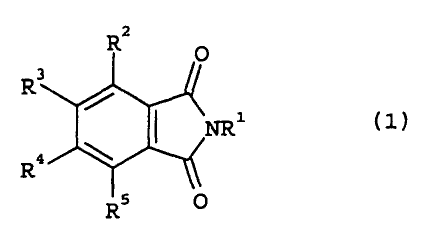 dans laquelle
R¹ est un radical aliphatique à chaîne droite ou ramifiée, ou cyclique, ayant de 10 à 30 atomes de carbone ; un radical alcényle ayant de 10 à 30 atomes de carbone, les radicaux mentionnés pouvant être substitués par un ou plusieurs substituants choisis dans l'ensemble comprenant les groupes alkyle en C₁-C₆, alcoxy en C₁-C₆, aryle en C₆-C₁₀, hydroxy ;
R², R³, R⁴ et R⁵ sont identiques ou différents et représentent chacun un atome d'hydrogène, un groupe alkyle en C₁-C₁₀, alcoxy en C₁-C₁₀, halogéno, -OR⁶, -NR⁶R⁷, -COOR⁶, -CONR⁶R⁷, -NR⁶-COR⁷, SO₂NR⁶R⁷, -SO₃M, -NO₂, -CN ou CF₃, R⁶ et R⁷ représentant chacun H ou un radical alkyle ayant de 1 à 10 atomes de carbone, et M représentant un équivalent d'un cation mono- à trivalent ; et
c) éventuellement, d'autres additifs usuels.

2. Préparation pigmentaire selon la revendication 1, **caractérisée en ce que** R¹ est le groupe décyle, dodécyle, tétradécyle, octadécyle, isotridécyle, lauryle, oléyle ou stéaryle.

3. Préparation pigmentaire selon la revendication 1 ou 2, **caractérisée en ce que** R², R³, R⁴ et R⁵ sont identiques ou différents et représentent chacun un atome d'hydrogène, le groupe méthyle, éthyle, propyle, butyle, méthoxy, éthoxy, amino, méthylamino, diméthylamino, éthylamino, diéthylamino, carboxy, COOCH₃, carboxamide, CON(CH₃)₂, sulfonamide, SO₂N(CH₃)₂, sulfo, nitro, cyano ou CF₃.

4. Préparation pigmentaire selon au moins l'une des revendications 1 à 3, **caractérisée en ce que** le pigment organique a) est un pigment monoazoique, un pigment disazoïque, un pigment de condensation disazoïque, un pigment azoïque laqué, un pigment de triphénylméthane, un pigment de thioindigo, un pigment de thiazinindigo, un pigment de pérylène, un pigment de périnone, un pigment d'anthanthrone, un pigment de dicétopyrrolopyrrole, un pigment de dioxazine, un pigment de quinacridone, un pigment de phtalocyanine, un pigment d'isoindolinone, un pigment d'isoindoline, un pigment de benzimidazolone, un pigment de naphtol ou un pigment de quinophtalone, ou du noir de carbone.

5. Préparation pigmentaire selon au moins l'une des revendications 1 à 4, qui contient
a) 5 à 60 % en poids, en particulier 10 à 50 % en poids de pigment ;
b) 0,1 à 15 % en poids, en particulier 0,5 à 10 % en poids de l'imide de formule (1) ;
c) 0 à 50 % en poids, en particulier 1 à 30 % en poids d'autres additifs ; et
d) 10 à 80 % en poids d'eau, par rapport au poids total de la préparation pigmentaire.

6. Préparation pigmentaire selon au moins l'une des revendications 1 à 5, **caractérisée en ce que** l'autre additif est un tensioactif anionique, cationique ou non ionique.

7. Préparation pigmentaire selon la revendication 6, **caractérisée en ce que** le tensioactif est un composé du groupe des alkylsulfates, des alcénylsulfates, des alkylsulfonates, des alcénylsulfonates, des alkylphosphates, des alkylbenzènesulfonates ; des produits de condensation d'un acide gras et de la taurine ou de l'acide hydroxyéthanesulfonique ; des produits d'alcoxylation d'alkylphénols, d'esters de colophane de l'huile de ricin, d'alcools gras, d'amines grasses, d'acides gras et d'amides d'acides gras.

8. Procédé pour fabriquer une préparation pigmentaire selon au moins l'une des revendications 1 à 7, **caractérisé en ce que** le composé de formule (1) est ajouté au pigment pendant sa synthèse, son broyage, sa dispersion et/ou sa finition.

9. Utilisation d'une préparation pigmentaire selon l'une ou plusieurs des revendications 1 à 7 en tant que substance colorante pour réaliser des peintures, des vernis, des encres d'imprimerie, des toners électrophotographiques et des révélateurs, des peintures en poudre, des encres, et pour colorer dans la masse des matériaux plastiques.
